(19) Europäisches Patentamt
European Patent Office
Office européen des brevets

(11) EP 4 471 904 A1

(12) **EUROPEAN PATENT APPLICATION**

(43) Date of publication:
**04.12.2024 Bulletin 2024/49**

(21) Application number: **24179217.5**

(22) Date of filing: **31.05.2024**

(51) International Patent Classification (IPC):
**H01M 4/587** *(2010.01)* **H01M 4/02** *(2006.01)*

(52) Cooperative Patent Classification (CPC):
**H01M 4/587;** H01M 2004/027; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.05.2023 CN 202310631276**

(71) Applicant: **Ningde Amperex Technology Ltd.
Ningde City, Fujian 352100 (CN)**

(72) Inventors:
• **CHEN, Yusheng
Ningde City, Fujian Province, People s Republic of
China, 352100 (CN)**
• **DONG, Jiali
Ningde City, Fujian Province, People s Republic of
China, 352100 (CN)**

(74) Representative: **Icosa
83 avenue Denfert-Rochereau
75014 Paris (FR)**

(54) **SECONDARY BATTERY AND ELECTRONIC APPARATUS**

(57) A secondary battery in this application includes a negative electrode. The negative electrode includes a current collector and a negative electrode active material layer provided on the current collector. The negative electrode active material layer includes a first active material layer and a second active material layer. The first active material layer is provided between the current collector and the second active material layer. The first active material layer includes a first active material. A first button battery using lithium plate as a negative electrode and the first active material as a positive material of a positive electrode experiences a charge and discharge test; a terminal potential slope of a lithium deintercalation curve of the first button battery is denoted as Sa; the second active material layer includes a second active material; a second button battery using lithium plate as a negative electrode and the second active material as a positive material of a positive electrode experiences a charge and discharge test; a terminal potential slope of a lithium deintercalation curve of the second button battery is denoted as Sb; and Sa<Sb; where $2 \text{ mAh} \cdot \text{g}^{-1}/\text{V} \leq Sa \leq 7 \text{ mAh} \cdot \text{g}^{-1}/\text{V}$, and $5 \text{ mAh} \cdot \text{g}^{-1}/\text{V} \leq Sb \leq 14 \text{ mAh} \cdot \text{g}^{-1}/\text{V}$.

FIG. 2

EP 4 471 904 A1

**Description**

**TECHNICAL FIELD**

This application relates to the field of energy storage. Specifically, this application relates to a secondary battery and an electronic apparatus.

**BACKGROUND**

With the widespread application of secondary batteries in the fields such as consumer electronics, electric vehicles, electric tools, and energy storage, the markets impose increasingly high requirements on the performance of secondary batteries. To allow various products to have maximum battery life and minimum charging time, secondary batteries are required to possess high energy density and excellent fast charging performance as far as possible. In existing secondary batteries, a conventional electrode plate is typically designed as a single layer, and it is challenging for a used active material to have both high energy density and fast charging capability. Therefore, it is usually necessary to reduce coating weight to improve the fast charging capability of the secondary batteries or increase the coating weight to increase the energy density of a lithium secondary battery. However, while reducing the coating weight to improve the fast charging capability of secondary batteries, a small amount of the active material results in significant energy density loss. Similarly, while increasing the coating weight to increase the energy density of secondary batteries, large thickness of the electrode plate and excessively long active ion transport path result in poor fast charging capability of secondary batteries.

**SUMMARY**

In view of the foregoing problems existing in the prior art, this application provides a secondary battery. The secondary battery in this application uses a specific design in which multiple electrode plate layers are provided, which minimizes the impact on the volumetric energy density of the secondary battery while significantly improving the fast charging performance of the secondary battery, thereby allowing the secondary battery to have both high energy density and excellent fast charging capability.

According to a first aspect, this application provides a secondary battery including a negative electrode. The negative electrode includes a current collector and a negative electrode active material layer provided on the current collector. The negative electrode active material layer includes a first active material layer and a second active material layer. The first active material layer is provided between the current collector and the second active material layer. The first active material layer includes a first active material. A first button battery using lithium plate as a negative electrode and the first active material as a positive material of a positive electrode experiences a charge and discharge test; a terminal potential slope of a lithium deintercalation curve of the first button battery is denoted as Sa; the second active material layer includes a second active material; a second button battery using lithium plate as a negative electrode and the second active material as a positive material of a positive electrode experiences a charge and discharge test; a terminal potential slope of a lithium deintercalation curve of the second button battery is denoted as Sb; and Sa<Sb; where 2 mAh•g-1/V≤Sa≤7 mAh•g$^{-1}$/V, and 5 mAh•g$^{-1}$/V≤Sb≤14 mAh•g$^{-1}$/V. For a negative electrode active material, the terminal potential slope of the lithium deintercalation curve of the button battery using the negative electrode active material reflects difficulty of lithium ions deintercalated from a negative electrode active material structure. When a lithium deintercalation potential slope is small, lithium ions can be substantially deintercalated below a potential of 1 V. Typically, the negative electrode active material, for example, lithium intercalating between graphite layers, exhibits this characteristic during deintercalation. A more complete interlayer structure of the negative electrode active material results in a smaller lithium deintercalation potential slope of the negative electrode active material and higher available gram capacity and initial coulombic efficiency of the secondary battery. However, when the structure is too complete, intercalating distance of lithium ions increases, which inhibits the fast charging capability of the secondary battery. A large lithium deintercalation potential slope facilitates fast transport of lithium ions and improves the kinetic performance of the secondary battery. However, a large lithium deintercalation potential slope indicates that some of the lithium ions can be fully deintercalated only under a potential above 1 V, and the gram capacity at this high potential is difficult to utilize under a cut-off voltage of 3.0 V of the secondary battery, leading to energy density loss of the secondary battery. The secondary battery in this application uses a design in which multiple active material layers are provided. The second active material with a large lithium deintercalation potential slope is used for an upper layer (the second active material layer), the first active material with a small lithium deintercalation potential slope is used for a lower layer (the first active material layer), and terminal potential slopes of lithium deintercalation curves of the upper and lower active material layers are both controlled within the foregoing ranges, not only allowing an electrode plate to have high compacted density but also allowing lithium ions to be quickly diffused and transported in a surface layer of the electrode plate, thereby allowing the secondary battery to have both high energy density and excellent kinetic performance.

In some embodiments, 2 mAh•g$^{-1}$/V≤Sa≤5 mAh•g$^{-1}$/V, and 5 mAh•g$^{-1}$/V≤Sb≤12 mAh•g$^{-1}$/V. A lithium deintercalation potential slope of the first active material being within a relatively small range can further increase the energy density of the secondary battery and also allow the kinetic performance of the secondary battery to be within an acceptable range.

In some embodiments, 8 mAh•g$^{-1}$/V≤Sb≤14 mAh•g$^{-1}$/V. When the lithium deintercalation potential slope of the second active material is excessively large, the gram capacity available below 1 V is reduced, leading to energy density loss of the secondary battery. In addition, excessive active sites of the second active material result in excessive side reactions with an electrolyte, which in turn affects the initial coulombic efficiency and cycling performance of the secondary battery.

In some embodiments, 4 mAh•g$^{-1}$/V≤Sa≤7 mAh•g$^{-1}$/V, and 8 mAh•g$^{-1}$/V≤Sb≤12 mAh•g$^{-1}$/V. The lithium deintercalation potential slopes of the first active material and the second active material being both within the foregoing ranges can further improve the energy density and kinetic performance of the secondary battery.

In some embodiments, 2 mAh•g$^{-1}$/V≤Sb-Sa≤12 mAh•g$^{-1}$/V. A difference between Sb and Sa represents an amplitude of a lithium deintercalation capability difference between the upper second active material layer and the lower first active material layer in the electrode plate. When the difference between Sb and Sa satisfies the foregoing range, the secondary battery has both high energy density and excellent kinetic performance. When the difference between Sb and Sa is small, the upper and lower active material layers have more similar lithium deintercalation capabilities. To be specific, the entire electrode plate is more prone to interlayer lithium intercalation of a graphite structure, resulting in a large gram capacity but poor lithium ion diffusion performance; or the entire electrode plate is more prone to adsorptive lithium intercalation of amorphous carbon, resulting in good lithium ion diffusion performance but a small gram capacity. When the difference between Sb and Sa is large, the upper and lower active material layers have a larger difference in lithium deintercalation capability, and a large gram capacity of the first active material cannot compensate for a low gram capacity of the second active material, resulting in low energy density; or high lithium ion diffusion capability of the second active material cannot compensate for a low lithium ion diffusion capability of the first active material, resulting in high electrochemical impedance. In some embodiments, 5 mAh•g$^{-1}$/V≤Sb-Sa≤8 mAh•g$^{-1}$/V.

In some embodiments, thickness of the negative electrode active material layer is denoted as T, thickness of the first active material layer is denoted as Ta, and thickness of the second active material layer is denoted as Tb, where 60%≤Ta/T≤85%, and 15%≤Tb/T≤40%. When thickness percentages of the first active material layer and the second active material layer are within the foregoing ranges, the secondary battery has both high energy density and excellent electrochemical performance. When the thickness percentage Tb of the second active material layer is higher than 40%, and the thickness percentage Ta of the first active material layer is lower than 60%, the secondary battery has significant energy density loss. When the thickness percentage Tb of the second active material layer is lower than 15%, and the thickness percentage Ta of the first active material layer is higher than 85%, the kinetic performance of the secondary battery is degraded significantly.

In some embodiments, the first active material includes artificial graphite. In some embodiments, the second active material includes artificial graphite.

In some embodiments, the negative electrode has a gram capacity of 335 mAh•g$^{-1}$ to 365 mAh•g$^{-1}$. When having an excessively small gram capacity, the negative electrode has good lithium ion diffusion capability but excessively low energy density; and when having an excessively large gram capacity, the negative electrode has high energy density but poor lithium ion diffusion capability.

In some embodiments, the negative electrode has a porosity of 20% to 40%. An excessively small porosity of the negative electrode is not conducive to infiltration and permeation of the electrolyte, resulting in difficulty in diffusion of lithium ions, thereby degrading the kinetic performance of the secondary battery; and an excessively large porosity results in a large contact area between the electrolyte and the active material, such that excessive side reactions take place, causing too fast capacity decay during cycling.

In some embodiments, the negative electrode has a compacted density of 1.60 g/cm$^3$ to 1.80 g/cm$^3$. An excessively high compacted density of the negative electrode is likely to cause overpressure of the electrode plate, affecting processing and electrical performance of the electrode plate, and excessively low compacted density of the negative electrode causes a failure in effectively increasing the energy density of the secondary battery.

According to a second aspect, this application provides an electronic apparatus including the secondary battery according to the first aspect.

The secondary battery in this application uses a design in which multiple electrode plate layers are provided. A negative electrode active material with a small lithium deintercalation potential slope is used for a lower layer close to the current collector, which can provide high energy density and initial coulombic efficiency for the secondary battery, thereby increasing the energy density of the secondary battery. A negative electrode active material with a large lithium deintercalation potential slope is used for an upper layer, lithium ions can be quickly diffused and transported in a surface layer of the electrode plate, improving fast charging capability of the secondary battery, thereby allowing the secondary battery to have both high energy density and excellent fast charging capability.

According to a third aspect, this application provides a method for preparing a negative electrode. The method includes: preparation of a first active material and preparation of a second active material. The first active material is prepared by coating natural graphite and/or artificial graphite and performing two different thermal treatments on natural graphite and/or artificial graphite, and the second active material is prepared by coating artificial graphite and performing one thermal treatment on artificial graphite.

Specifically, preparation of the first active material includes: mixing artificial graphite and/or natural graphite with a coating agent to prepare a first mixture, where a mass percentage of the coating agent is 1% to 5% based on mass of the first mixture; performing first thermal treatment on the first mixture in an inert atmosphere to prepare a first thermal treatment product; and performing second thermal treatment on the first thermal treatment product in a mixed gas of $CO_2$ and $N_2$ to prepare the first active material.

Preparation of the second active material includes: mixing artificial graphite with a coating agent to prepare a second mixture, where a mass percentage of the coating agent is 3% to 8% based on mass of the second mixture; and in an inert atmosphere, performing third thermal treatment on the second mixture to prepare the second active material.

The first thermal treatment is performed at 950°C to 1200°C for 1 h to 5 h; the second thermal treatment is performed at 750°C to 1100°C for 2 h to 8 h; the third thermal treatment is performed at 700°C to 1150°C for 4 h to 10 h; and the coating agent is asphalt.

The first active material and the second active material are respectively used as a first active material layer and a second active material layer of the negative electrode, and the second active material layer is located on an upper surface of the first active material layer (that is, a surface of the negative electrode away from the current collector in a thickness direction), such that the secondary battery can have both high energy density and fast charging capability.

## BRIEF DESCRIPTION OF DRAWINGS

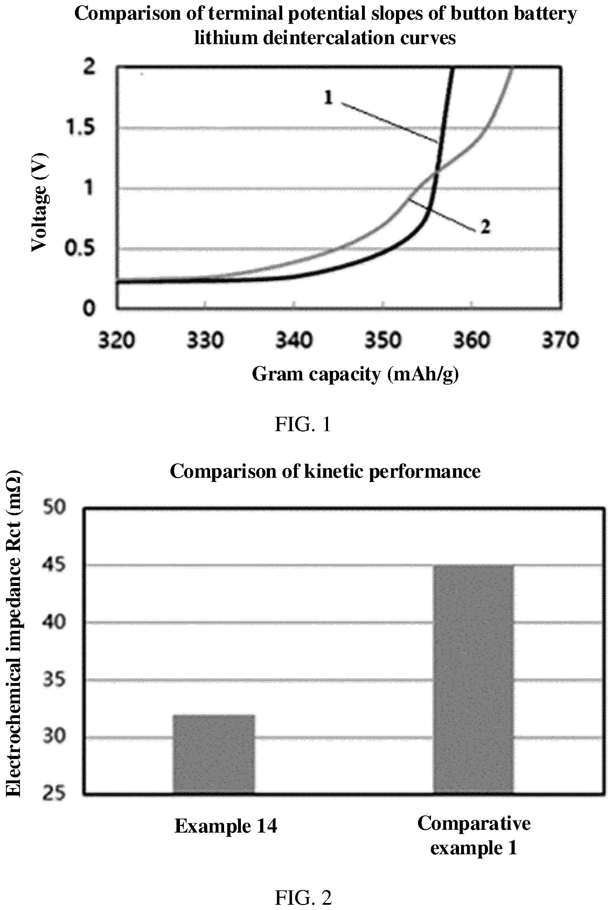

FIG. 1 shows lithium deintercalation curves of a first button battery and a second button battery in Example 2 of this application, where 1 represents the first button battery, and 2 represents the second button battery.

FIG. 2 is a diagram illustrating comparison of fast charging performance of secondary batteries in Example 14 and Comparative example 1 of this application.

## DETAILED DESCRIPTION

In the description of this application, "above" or "below" is inclusive of the present number, unless otherwise specified.

Unless otherwise specified, the terms used in this application have well known meanings as commonly understood by persons skilled in the art. Unless otherwise specified, numerical values of parameters mentioned in this application may be measured by using various measurement methods commonly used in the art (for example, they may be tested by using the methods provided in some embodiments of this application).

A list of items connected by the terms "at least one of", "at least one piece of", "at least one type of", or other similar terms may mean any combination of the listed items. For example, if items A and B are listed, the phrase "at least one of A or B" means only A, only B, or A and B. In another example, if items A, B, and C are listed, the phrase "at least one of A, B, or C" means only A, only B, only C, A and B (excluding C), A and C (excluding B), B and C (excluding A), or all of A, B, and C. The item A may contain a single constituent or multiple constituents. The item B may contain a single constituent or multiple constituents. The item C may contain a single constituent or multiple constituents.

The following clearly and completely describes the technical solutions in some embodiments of this application with reference to the accompanying drawings in some embodiments of this application. Apparently, the described embodiments are only some rather than all of the embodiments of this application. Without conflicts, the following embodiments and features in these embodiments may be combined with each other.

I. Secondary battery

The secondary battery in this application includes a negative electrode. The negative electrode includes a current collector, a first active material layer, and a second active material layer. The first active material layer is provided between the current collector and the second active material layer. The first active material layer includes a first active material. A first button battery using lithium plate as a negative electrode and the first active material as a positive material of a positive electrode experiences a charge and discharge test; a terminal potential slope of a lithium deintercalation curve of the first button battery is denoted as Sa; the second active material layer includes a second active material; a second button battery using lithium plate as a negative electrode and the second active material as a positive material of a positive electrode experiences a charge and discharge test; a terminal potential slope of a lithium deintercalation curve of the second button battery is denoted as Sb; and Sa<Sb; where 2 mAh•g$^{-1}$/V≤Sa≤7 mAh•g$^{-1}$/V, and 5 mAh•g$^{-1}$/V≤Sb≤14 mAh•g$^{-1}$/V. For a negative electrode active material, the terminal potential slope of the lithium deintercalation curve of the button battery using the negative electrode active material reflects difficulty of lithium ions deintercalated from a negative electrode active material structure. When a lithium deintercalation potential slope is small, lithium ions can be substantially deintercalated below a potential of 1 V. Typically, the negative electrode active material, for example, lithium intercalating between graphite layers, exhibits this characteristic during deintercalation. A more complete interlayer structure of the negative electrode active material results in a smaller lithium deintercalation potential slope of the negative electrode active material and higher available gram capacity and initial coulombic efficiency of the secondary battery. However, when the structure is too complete, intercalating distance of lithium ions increases, which inhibits the fast charging capability of the secondary battery. A large lithium deintercalation potential slope facilitates fast transport of lithium ions and improves the kinetic performance of the secondary battery. However, a large lithium deintercalation potential slope indicates that some of the lithium ions can be fully deintercalated only under a potential above 1 V, and the gram capacity at this high potential is difficult to utilize under a cut-off voltage of 3.0 V of the secondary battery, leading to energy density loss of the secondary battery. The secondary battery in this application uses a design in which multiple active material layers are provided. The second active material with a large lithium deintercalation potential slope is used for an upper layer (the second active material layer), the first active material with a small lithium deintercalation potential slope is used for a lower layer (the first active material layer), and terminal potential slopes of lithium deintercalation curves of the upper and lower active material layers are both controlled within the foregoing ranges, not only allowing an electrode plate to have high compacted density but also allowing lithium ions to be quickly diffused and transported in a surface layer of the electrode plate, thereby allowing the secondary battery to have both high energy density and excellent kinetic performance.

In this application, the lithium deintercalation potential slope of the active material is obtained from a lithium deintercalation curve of a button battery including this active material. For a specific test method, reference is made to a test method in the following specific embodiments.

In some embodiments, Sa is 2.0 mAh•g$^{-1}$/V, 2.3 mAh•g$^{-1}$/V, 2.5 mAh•g$^{-1}$/V, 2.7 mAh•g$^{-1}$/V, 3.0 mAh•g$^{-1}$/V, 3.1 mAh•g$^{-1}$/V, 3.3 mAh•g$^{-1}$/V, 3.5 mAh•g$^{-1}$/V, 3.7 mAh•g$^{-1}$/V, 4.0 mAh•g$^{-1}$/V, 4.1 mAh•g$^{-1}$/V, 4.3 mAh•g$^{-1}$/V, 4.5 mAh•g$^{-1}$/V, 4.7 mAh•g$^{-1}$/V, 5.0 mAh•g$^{-1}$/V, 5.3 mAh•g$^{-1}$/V, 5.5 mAh•g$^{-1}$/V, 5.7 mAh•g$^{-1}$/V, 6.0 mAh•g$^{-1}$/V, 6.3 mAh•g$^{-1}$/V, 6.5 mAh•g$^{-1}$/V, 7.0 mAh•g$^{-1}$/V, or within a range defined by any two of these values.

In some embodiments, 2 mAh•g$^{-1}$/V≤Sa≤5 mAh•g$^{-1}$/V, and 5 mAh•g$^{-1}$/V≤Sb≤12 mAh•g$^{-1}$/V. A lithium deintercalation potential slope of the first active material being within a small range can further increase the energy density of the secondary battery and also allow the kinetic performance of the secondary battery to be within an acceptable range.

In some embodiments, Sb is 5.0 mAh•g$^{-1}$/V, 5.5 mAh•g$^{-1}$/V, 6 mAh•g$^{-1}$/V, 6.5 mAh•g$^{-1}$/V, 7 mAh•g$^{-1}$/V, 7.5 mAh•g$^{-1}$/V, 8 mAh•g$^{-1}$/V, 8.5 mAh•g$^{-1}$/V, 9 mAh•g$^{-1}$/V, 9.5 mAh•g$^{-1}$/V, 10 mAh•g$^{-1}$/V, 10.5 mAh•g$^{-1}$/V, 11 mAh•g$^{-1}$/V, 11.5 mAh•g$^{-1}$/V, 12 mAh•g$^{-1}$/V, 12.5 mAh•g$^{-1}$/V, 13 mAh•g$^{-1}$/V, 13.5 mAh•g$^{-1}$/V, 14 mAh•g$^{-1}$/V, or within a range defined by any two of these values. In some embodiments, 8 mAh•g$^{-1}$/V≤Sb≤14 mAh•g$^{-1}$/V. When the lithium deintercalation potential slope of the second active material is excessively large, the gram capacity available below 1 V is reduced, leading to energy density loss of the secondary battery. In addition, excessive active sites of the second active material result in excessive side reactions with an electrolyte, which in turn affects the initial coulombic efficiency and cycling performance of the secondary battery.

In some embodiments, 4 mAh•g$^{-1}$/V≤Sa≤7 mAh•g$^{-1}$/V, and 8 mAh•g$^{-1}$/V≤Sb≤12 mAh•g$^{-1}$/V. The lithium deintercalation potential slopes of the first active material and the second active material being both within the foregoing ranges can further improve the energy density and kinetic performance of the secondary battery.

In some embodiments, 2 mAh•g$^{-1}$/V≤Sb-Sa≤12 mAh•g$^{-1}$/V. In some embodiments, Sa is 2.0 mAh•g$^{-1}$/V, 2.5 mAh•g$^{-1}$/V, 3 mAh•g$^{-1}$/V, 3.5 mAh•g$^{-1}$/V, 4 mAh•g$^{-1}$/V, 4.5 mAh•g$^{-1}$/V, 5 mAh•g$^{-1}$/V, 5.5 mAh•g$^{-1}$/V, 6 mAh•g$^{-1}$/V, 6.5 mAh•g$^{-1}$/V, 7 mAh•g$^{-1}$/V, 7.5 mAh•g$^{-1}$/V, 8 mAh•g$^{-1}$/V, 8.5 mAh•g$^{-1}$/V, 9 mAh•g$^{-1}$/V, 9.5 mAh•g$^{-1}$/V, 10 mAh•g$^{-1}$/V, 10.5 mAh•g$^{-1}$/V, 11 mAh•g$^{-1}$/V, 11.5 mAh•g$^{-1}$/V, 12 mAh•g$^{-1}$/V, or within a range defined by any two of these values. A difference between Sb and Sa represents an amplitude of a lithium deintercalation capability difference between the upper second active material layer and the lower first active material layer in the electrode plate. When the difference between Sb and Sa satisfies the foregoing range, the secondary battery has both high energy density and excellent kinetic performance. When the difference between Sb and Sa is small, the upper and lower active material layers have more similar lithium deintercalation capabilities. To be specific, the entire electrode plate is more prone to interlayer lithium intercalation of a graphite structure, resulting in a large gram capacity but poor lithium ion diffusion performance; or the entire electrode plate is more prone to adsorptive lithium intercalation of amorphous carbon, resulting in good lithium ion diffusion performance but a small gram capacity. When the difference between Sb and Sa is large, the upper and lower active material layers have a larger difference in lithium deintercalation capability, and a large gram capacity of the first active material cannot compensate for a low gram capacity of the second active material, or high lithium ion diffusion capability of the second active material cannot make up low lithium ion diffusion capability of the first active material. In some embodiments, 5 mAh•g$^{-1}$/V≤Sb-Sa≤8 mAh•g$^{-1}$/V.

In some embodiments, the first active material includes natural graphite and/or artificial graphite.

In some embodiments, a method for preparing the first active material includes the following steps.

S1. Mix artificial graphite and/or natural graphite with a coating agent to prepare a first mixture.

S2. Perform first thermal treatment on the first mixture in an inert atmosphere to prepare a first thermal treatment product.

S3. Perform second thermal treatment on the first thermal treatment product in a mixed gas of $CO_2$ and $N_2$ to prepare the first active material.

In some embodiments, in S1, a mass percentage of the coating agent is 1% to 5%, for example, 2%, 3%, or 4% based on mass of the first mixture. In some embodiments, the coating agent is asphalt.

In some embodiments, in S2, the first thermal treatment is performed at 950°C to 1200°C, for example, 1000°C, 1050°C, 1100°C, or 1150°C. In some embodiments, in S2, the first thermal treatment is performed for 1 h to 5 h, for example, 2 h, 3 h, or 4 h.

In some embodiments, in S3, the second thermal treatment is performed at 750°C to 1100°C, for example, 800°C, 850°C, 900°C, 950°C, 1000°C, or 1050°C. In some embodiments, in S3, the second thermal treatment is performed for 2 h to 8 h, for example, 3 h, 4 h, 5 h, 6 h, or 7 h.

In some embodiments, in the mixed gas of $CO_2$ and $N_2$, a volumetric percentage of $CO_2$ is 3% to 7%, for example, 4%, 5%, or 6%.

In some embodiments, the second active material includes artificial graphite. In some embodiments, the second active material is selected from artificial graphite coated with amorphous carbon.

In some embodiments, a method for preparing the second active material includes the following steps.

M1. Mix artificial graphite with a coating agent to prepare a second mixture.

M2. Perform third thermal treatment on the second mixture in an inert atmosphere to prepare the second active material.

In some embodiments, in M1, a mass percentage of the coating agent is 3% to 8%, for example, 4%, 5%, 6%, or 7% based on mass of the second mixture. In some embodiments, the coating agent is asphalt.

In some embodiments, in M2, the third thermal treatment is performed at 700°C to 1150°C, for example, 750°C, 800°C, 850°C, 900°C, 950°C, 1000°C, 1050°C, 1110°C, or 1150°C. In some embodiments, in M2, the third thermal treatment is performed for 4 h to 10 h, for example, 5 h, 6 h, 7 h, 8 h, or 9 h.

In some embodiments, artificial graphite is prepared from a carbonaceous material such as needle coke, petroleum coke, or asphalt coke through graphitization at a high temperature. In some embodiments, natural graphite is prepared from natural flaky graphite through acid pickling and nodularization.

In some embodiments, thickness of the negative electrode active material layer is denoted as T, thickness of the first active material layer is denoted as Ta, and thickness of the second active material layer is denoted as Tb, where 60%≤Ta/T≤85%, and 15%≤Tb/T≤40%. In some embodiments, Ta/T is 60%, 65%, 70%, 75%, 80%, or 85%. In some embodiments, Tb/T is 15%, 20%, 25%, 30%, 35%, or 40%. When thickness percentages of the first active material layer and the second active material layer are within the foregoing ranges, the secondary battery has both high energy density and excellent electrochemical performance. When the thickness percentage Tb of the second active material layer is higher than 40%, and the thickness percentage Ta of the first active material layer is lower than 60%, the secondary battery has significant energy density loss. When the thickness percentage Tb of the second active material layer is lower than 15%, and the thickness percentage Ta of the first active material layer is higher than 85%, the kinetic performance of the secondary battery is degraded significantly.

In some embodiments, the negative electrode active material layer has a gram capacity of 335 mAh•g$^{-1}$ to 365 mAh•g$^{-1}$. In some embodiments, the gram capacity of the negative electrode active material layer is 340 mAh•g$^{-1}$, 345 mAh•g$^{-1}$, 350 mAh•g$^{-1}$, 355 mAh•g$^{-1}$, or 360 mAh•g$^{-1}$. When having an excessively small gram capacity, the negative electrode active material layer has good lithium ion diffusion capability but excessively low energy density; and when having an excessively large gram capacity, the negative electrode active material layer has high energy density but poor lithium ion diffusion capability.

In some embodiments, a negative electrode plate has a porosity of 20% to 40%. In some embodiments, the porosity of the negative electrode plate is 22%, 24%, 26%, 28%, 30%, 32%, 34%, 36%, 38%, or in a range defined by any two of these values. An excessively small porosity of the negative electrode plate is not conducive to infiltration and permeation of the electrolyte, resulting in difficulty in diffusion of lithium ions, thereby degrading the kinetic performance of the secondary battery; and an excessively large porosity results in a large contact area between the electrolyte and the active material, such that excessive side reactions take place, causing too fast capacity decay during cycling.

In some embodiments, the negative electrode active material layer has a compacted density of 1.60 g/cm$^3$ to 1.80 g/cm$^3$. In some embodiments, the compacted density of the negative electrode active material layer is 1.63 g/cm$^3$, 1.65 g/cm$^3$, 1.67 g/cm$^3$, 1.70 g/cm$^3$, 1.73 g/cm$^3$, 1.75 g/cm$^3$, 1.77 g/cm$^3$, or in a range defined by any two of these values. An excessively high compacted density of the negative electrode active material layer is likely to cause overpressure of the electrode plate, affecting processing and electrical performance of the electrode plate, and excessively low compacted density of the negative electrode active material layer causes a failure in effectively increasing the energy density of the secondary battery.

In some embodiments, the first active material layer and the second active material layer each further include a binder and a conductive agent. In some embodiments, the binder includes at least one of styrene-butadiene rubber, polyacrylic acid, polyacrylate, polyimide, polyamide-imide, polyvinylidene fluoride, polyethylene difluoride, polytetrafluoroethylene, waterborne acrylic resin, polyvinyl formal, or styrene-acrylic acid copolymer resin. In some embodiments, any conductive material causing no chemical change can be used as the conductive material. In some embodiments, the conductive material includes at least one of conductive carbon black, acetylene black, carbon nanotubes, Ketjen black, conductive graphite, or graphene.

In some embodiments, the negative electrode current collector may be copper foil, nickel foil, stainless steel foil, titanium foil, nickel foam, copper foam, a polymer substrate coated with a conductive metal, or a combination thereof.

In some embodiments, the secondary battery further includes a positive electrode, and the positive electrode includes a positive electrode current collector and a positive electrode active material layer.

In some embodiments, the positive electrode active material layer includes a positive electrode active material, a binder, and a conductive agent. In some embodiments, the positive electrode active material may include at least one of lithium cobaltate, lithium nickel manganese cobaltate, lithium nickel manganese aluminate, lithium iron phosphate, lithium vanadium phosphate, lithium cobalt phosphate, lithium manganese phosphate, lithium ferromanganese phosphate, lithium iron silicate, lithium vanadium silicate, lithium cobalt silicate, lithium manganese silicate, spinel-type lithium manganate, spinel-type lithium nickel manganate, or lithium titanate. In some embodiments, the binder may include various binder polymers, for example, at least one of polyvinylidene fluoride, polytetrafluoroethylene, polyolefins, sodium carboxymethyl cellulose, lithium carboxymethyl cellulose, modified polyvinylidene fluoride, modified SBR, or polyurethane. In some embodiments, any conductive material causing no chemical change can be used as the conductive agent. Examples of the conductive agent include: a carbon-based material such as natural graphite, artificial graphite, carbon black, acetylene black, Ketjen black, or carbon fiber; a metal-based material such as metal powder or metal fiber including copper, nickel, aluminum, or silver; a conductive polymer such as a polyphenylene derivative; or a mixture thereof.

In some embodiments, the positive electrode current collector may be a metal foil or a composite current collector. For example, an aluminum foil may be used. The composite current collector may be formed by forming a metal material (copper, copper alloy, nickel, nickel alloy, titanium, titanium alloy, silver, silver alloy, or the like) on a polymer matrix.

The secondary battery in this application further includes a separator. The material or shape of the separator used in the secondary battery in this application is not particularly limited, and may be based on any technology disclosed in the prior art. In some embodiments, the separator includes a polymer, an inorganic substance, or the like formed by a material stable to the electrolyte in this application.

For example, the separator may include a substrate layer and a surface treatment layer. The substrate layer is a non-woven fabric, film, or composite film having a porous structure, and the substrate layer is made of a material selected from at least one of polyethylene, polypropylene, polyethylene terephthalate, or polyimide. Specifically, a polypropylene porous film, a polyethylene porous film, a polypropylene non-woven fabric, a polyethylene non-woven fabric, or a polypropylene-polyethylene-polypropylene porous composite film may be selected.

The surface treatment layer is provided on at least one surface of the substrate layer, and the surface treatment layer may be a polymer layer or an inorganic substance layer, or may be a layer formed by mixing a polymer and an inorganic substance. The inorganic substance layer includes inorganic particles and a binder. The inorganic particles are selected from at least one of aluminum oxide, silicon oxide, magnesium oxide, titanium oxide, hafnium oxide, tin oxide, cerium oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, vinylidene fluoride-hexafluoropropylene copolymer, polyamide, polyacrylonitrile, polyacrylic ester, polyacrylic acid, polyacrylic salt, polyvinylpyrrolidone, polyvinyl ether, polymethyl methacrylate, polytetrafluoroethylene, or polyhexafluoropropylene. The polymer layer includes a polymer, and a material of the polymer is selected from at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

The secondary battery in this application further includes an electrolyte. The electrolyte that can be used in this application may be an electrolyte known in the prior art.

According to some embodiments of this application, the electrolyte includes an organic solvent, a lithium salt, and an optional additive. The organic solvent of the electrolyte in this application may be any organic solvent known in the prior art which can be used as a solvent of the electrolyte. An electrolytic salt used in the electrolyte according to this application is not limited, and may be any electrolytic salt known in the prior art. The additive of the electrolyte according to this application may be any additive known in the prior art which can be used as an additive of the electrolyte. In some embodiments, the organic solvent includes but is not limited to: ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, at least one of 1,3-dioxolane (DOL) or ethylene glycol dimethyl ether (DME). In some embodiments, the lithium salt includes at least one of an organic lithium salt or an inorganic lithium salt. In some embodiments, the lithium salt includes but is not limited to: lithium hexafluorophosphate ($LiPF_6$), lithium tetrafluoroborate ($LiBF_4$), lithium difluorophosphate ($LiPO_2F_2$), lithium bistrifluoromethanesulfonimide $LiN(CF_3SO_2)_2$ (LiTFSI), lithium bis(fluorosulfonyl)imide $Li(N(SO_2F)_2)$ (LiFSI), lithium bisoxalate borate $LiB(C_2O_4)_2$ (LiBOB), or lithium difluoro(oxalato)borate $LiBF_2(C_2O_4)$ (LiDFOB). In some embodiments, the additive includes at least one of fluoroethylene carbonate or adiponitrile.

In some embodiments, the secondary battery is a wound secondary battery or a laminated secondary battery.

According to some embodiments of this application, the secondary battery in this application includes but is not limited to a lithium-ion battery or a sodium-ion battery. In some embodiments, the secondary battery includes a lithium-ion battery.

II. Electronic apparatus

This application further provides an electronic apparatus including the secondary battery according to the first aspect of this application.

The electronic device or apparatus in this application is not particularly limited. In some embodiments, the electronic device in this application includes but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, and a lithium-ion capacitor.

In the following examples and comparative examples, all reagents, materials, and instruments used are commercially available unless otherwise specified.

**Examples and comparative examples**

The following describes some embodiments of this application more specifically by using examples and comparative examples. Various tests and evaluations are performed according to the following methods. In addition, unless otherwise specified, "part" and "%" are based on weight.

**Example 1**

1. Preparation of negative electrode active material

First active material: 5 kg of an artificial graphite material was weighed and well mixed with a graphite material using asphalt as a coating agent to prepare a first mixture, where a mass ratio of the asphalt and the graphite material was 2:98. The first mixture was subjected to first thermal treatment, where a condition for the first thermal treatment was that: reaction took place at 1100°C in a nitrogen atmosphere for 2 h. After the reaction ended and the temperature dropped to room temperature, a first thermal treatment product was prepared. The first thermal treatment product was subjected to second thermal treatment. Conditions for performing the second thermal treatment were that: a mixed gas of 5% $CO_2$ and 95% $N_2$ was used as a reaction atmosphere, a reaction temperature T1 was 1000°C, and a reaction time H1 was 6 h. After the reaction ended and the temperature dropped to room temperature, the first active material was prepared.

Second active material: 5 kg of an artificial graphite material was weighed and well mixed with a graphite material using asphalt as a coating agent to prepare a second mixture, where a mass ratio of the asphalt and the graphite material was 5:95. Subsequently, the second mixture was subjected to third thermal treatment. Conditions for performing the third thermal treatment were that: reaction took place at a temperature T2 of 800°C for a time H2 of 4 h in a nitrogen atmosphere. After the reaction ended and the temperature dropped to room temperature, the second active material could be prepared.

Preparations in the other examples and comparative examples were performed by regulating the coating agent asphalt proportion W1, reaction temperature T1, and reaction time H1 in the mixed gas of 5% $CO_2$ and 95% $N_2$ under the preparation condition of the first active material in Example 1 and regulating the coating agent asphalt proportion W2, reaction temperature T2, and reaction time H2 under the preparation condition of the second active material.

2. Preparation of negative electrode

The first active material, sodium carboxymethyl cellulose (CMC), and styrene-butadiene rubber (SBR) were evenly dispersed in an appropriate amount of deionized water at a mass ratio of 97.5:1.2:1.3 to prepare a slurry 1. The second active material, sodium carboxymethyl cellulose (CMC), and styrene-butadiene rubber (SBR) were evenly dispersed in an appropriate amount of deionized water at a mass ratio of 97.5:1.2:1.3 to prepare a slurry 2. A copper foil served as a current collector, the slurry 1 was uniformly applied onto the current collector as a first active material layer, and the slurry 2 was uniformly applied onto the current collector as a second active material layer; and after the application, drying and cold pressing were performed to prepare a negative electrode plate, which was also referred to as a negative electrode. Thickness of the first active material layer took up 60% of thickness of the active material layer, and thickness of the second active material layer took up 40% of the thickness of the active material layer.

3. Preparation of positive electrode

Lithium cobalt oxide (chemical formula: $LiCoO_2$) served as an active material of a positive electrode; the lithium cobalt oxide, a conductive agent acetylene black, and a binder polyvinylidene fluoride (PVDF for short) were fully stirred and mixed in an appropriate amount of N-methylpyrrolidone (NMP for short) solvent at a weight ratio of 96.3:2.2:1.5, to prepare a uniform positive electrode slurry; the slurry was applied onto a current collector Al foil; and after the application, drying and cold pressing were performed to prepare a positive electrode plate, which was also referred to a positive electrode.

4. Preparation of electrolyte

In a dry argon atmosphere glove box, ethylene carbonate (EC), propylene carbonate (PC), ethyl methyl carbonate (EMC), and diethyl carbonate (DEC) were mixed at a mass ratio of EC:PC:EMC:DEC=1:3:3:3. Subsequently, fluoroethylene carbonate and 1,3-propane sulfolactone were added, dissolved, and fully stirred. Then, a lithium salt $LiPF_6$ was added and the resulting mixture was well mixed to prepare an electrolyte. A mass percentage of $LiPF_6$ was 12.5%, a mass percentage of fluoroethylene carbonate was 2%, and a mass percentage of 1,3-propane sulfolactone was 2%, where the mass percentage of each substance was calculated based on mass of the electrolyte.

5. Preparation of separator

A porous polyethylene polymer film was used as a separator.

6. Preparation of lithium-ion battery

The positive electrode, the separator, and the negative electrode were stacked in order, such that the separator was placed between the positive electrode and the negative electrode for separation. Then, the stack was wound to obtain an electrode assembly; after tab welding, the electrode assembly was placed in an outer packaging aluminum foil film. The foregoing prepared electrolyte was injected into the dried electrode assembly, followed by processes such as vacuum packaging, standing, formation, shaping, and capacity testing, to obtain a pouch lithium-ion battery.

**Example 2 to Example 18 and Comparative example 1 to Comparative example 4**

Preparation of negative electrode active material

The preparation processes of the first active material and the second active material were similar to those in Example 1, except that corresponding negative electrode active materials were prepared by regulating the reaction temperature T1, reaction time H1, reaction temperature T2, and reaction time H2. Specific preparation parameters are shown in Table 1 and Table 2.

The preparation processes of the negative electrode, positive electrode, separator, electrolyte, and lithium-ion battery were the same as those in Example 1.

**Example 19 to Example 25**

Preparation of negative electrode active material

The preparation process of the negative electrode active material was the same as that in Example 14.

Preparation of negative electrode: The preparation process of the negative electrode was similar to that in Example 14, except that the thicknesses of the first active material layer and second active material layer were regulated by regulating the coating weight of the slurry, where specific regulated mass percentages of the first active material layer and second active material layer are shown in Table 3.

The preparation processes of the positive electrode, separator, electrolyte, and lithium-ion battery were the same as those in Example 14.

**Example 26 to Example 32**

Preparation of negative electrode active material

The preparation process of the negative electrode active material was the same as that in Example 21.

Preparation of negative electrode: The preparation process of the negative electrode was similar to that in Example 21, except that the gram capacity of the obtained negative electrode plate was regulated by regulating the proportions W1 and W2 of the coating agents, where specific regulated proportions and gram capacity of the negative electrode plate are shown in Table 4. The preparation processes of the positive electrode, separator, electrolyte, and lithium-ion battery were the same as those in Example 21.

**Test method**

**Test for related parameters of negative electrode active material**

A fully discharged lithium-ion battery was disassembled. A negative electrode was taken out, soaked in DMC (dimethyl carbonate) for 20 min, subsequently eluted by DMC and acetone to remove an electrolyte and a surface SEI film, and then roasted in an oven at 80°C for 12 h to obtain a processed negative electrode plate.

M1 g of powder was scraped off in a thickness range of 10 $\mu$m away from a surface layer of the negative electrode plate using a scraper, and the powder scrapped off was roasted in an air atmosphere at 500°C for 3 h to prepare a first active material.

M2 g of powder was scraped off in a thickness range of 10 $\mu$m away from a current collector of the negative electrode plate using the scraper, and the powder scrapped off was roasted in the air atmosphere at 500°C for 3 h to prepare a second active material.

M g of all the foregoing powder was scraped off the current collector of the negative electrode plate using the scraper, and the powder scrapped off was roasted in the air atmosphere at 500°C for 3 h to prepare a negative electrode active material.

The first active material, second active material, and negative electrode active material prepared were tested as follows.

**1. Test of terminal potential slope of lithium deintercalation curve**

The foregoing first active material, second active material, and negative electrode active material were each mixed with SBR, CMC, and conductive carbon at a weight ratio of 93:2.5:2.5:2, then added into an appropriate amount of deionized water solvent, and the resulting mixtures were fully stirred and mixed to form uniform negative electrode slurries; the slurries were respectively applied onto current collector Cu foils, dried, and cold pressed to respectively form a first negative electrode plate containing the first active material, a second negative electrode plate containing the second active material, and a negative electrode plate containing all the active materials.

First button battery:

The prepared first negative electrode plate served as a positive electrode of a button battery and was assembled with a lithium plate, a separator (same as that in Example 1), an electrolyte (same as that in Example 1), a steel plate, nickel foam, and a button battery housing to obtain a first button battery, and the first button battery was left standing for 6 h before test.

Second button battery:

The prepared second negative electrode plate served as a positive electrode of a button battery and was assembled with a lithium plate, a separator (same as that in Example 1), an electrolyte (same as that in Example 1), a steel plate, nickel foam, and a button battery housing to obtain a second button battery, and the second button battery was left standing for 6 h before test.

Integral electrode plate button battery:

The prepared negative electrode plate containing all the active materials served as a positive electrode of a button battery and was assembled with a lithium plate, a separator (same as that in Example 1), an electrolyte (same as that in Example 1), a steel plate, nickel foam, and a button battery housing to obtain an integral electrode plate button battery, and the integral electrode plate button battery was left standing for 6 h before test.

Potential slope test:

The assembled button battery was placed on a Land tester for test. A test process was as follows: the button battery was discharged to 5 mv at 0.05C, left standing for 5 min, discharged to 5 mv at 0.05 mA, discharged to 5 mv at 0.01 mA, and charged to 2.0 V at 0.1C to obtain a charge capacity, and ultimately the charge capacity was divided by the weight of the active material to obtain a gram capacity of a sample. A lithium deintercalation curve of the material could be obtained by a drawing a diagram about a charge voltage and a gram capacity; a gram capacity corresponding to a potential of 2 V was recorded as Cap2, a gram capacity corresponding to a potential of 1 V was recorded as Cap1, and lithium deintercalation terminal potential slope $S=(Cap2-Cap1)/(2V-1V)$ mAh/g/V; and a potential slope Sa of the first active material and a potential slope Sb of the second active material were respectively measured and recorded.

Overall gram capacity test of electrode plate:

The assembled integral electrode plate button battery was placed on the Land tester for test. A test process was as follows: the integral electrode plate button battery was discharged to 5 mv at 0.05C, left standing for 5 min, discharged to 5 mv at 0.05 mA, discharged to 5 mv at 0.01 mA, and charged to 2.0 V at 0.1C to obtain a charge capacity, and ultimately the charge capacity was divided by the weight of the active material to obtain an overall gram capacity of the electrode plate.

**2. Porosity test of negative electrode plate**

A U.S. Micromeritics True Density Meter (ACCUPYC II1345) and a gas replacement method were used for test. A percentage of a pore volume in the electrode plate to a total volume of the electrode plate is called a porosity of the electrode plate, which is calculated according to the following formula: $P=(V-V0) / V \times 100\%$, where V0 represents a true volume, and V represents an apparent volume.

**Relevant performance test of lithium-ion battery**

**3. Volumetric energy density**

A lithium-ion battery experienced a capacity test according to the following process:

(1) left standing at 25°C for 30 min;
(2) charged to 4.48 V at 0.5C and to 0.05C at a constant voltage;
(3) left standing for 5 min;
(4) discharged to 3.0 V at 0.2C; and
(5) left standing for 5 min to finish the test.

A discharge capacity obtained in step (4) was recorded as C, a discharge plateau voltage was recorded as P, thickness of the lithium-ion battery was measured as G, length of the lithium-ion battery was measured as L, width of the lithium-ion battery was measured as W, and volumetric energy density E of the lithium-ion battery could be calculated according to the following formula:

$$E=(C \times P)/(G \times L \times W).$$

**4. Electrochemical impedance test**

(1) The battery was tested at a temperature of 25°C;
(2) left standing for 60 min;
(3) charged to 4.48 V at a constant current (CC) of 0.5 C, and charged to 0.025C at a constant voltage (CV);
(4) left standing for 10 min;
(5) discharged to 3 V at a direct current (DC) of 0.1C;
(6) left standing for 10 min;
(7) charged to 4.48 V at a CC of 0.5C, and charged to 0.025C at a CV;
(8) left standing for 1 h;
(9) discharged at a DC of 0.1C for 10s;
(10) discharged at a DC of 1C for 1s;
(11) left standing for 1 h;
(12) discharged at a DC of 0.5C for 6 min;
(13) skipping to step (15) if the voltage is ≤ 2.5 V;
(14) cyclically subjected to step (8) to step (13) 26 times;
(15) left standing for 10 min;
(16) charged to 3.95 V at a CC of 0.5C and charged to 0.025C at a CV; and
(17) left standing for 10 min.

A 1s direct-current impedance of the battery at 70%SOC was the electrochemical impedance Rct. A smaller Rct indicates better kinetic performance of the lithium-ion battery.

**Test results**

Table 1 shows influences of the terminal potential slope Sa of the button battery lithium deintercalation curve of the first active material and the terminal potential slope Sb of the button battery lithium deintercalation curve of the second active material on performance of the lithium-ion battery.

## Table 1

| Example and Comparative example | Preparation parameter | | Negative electrode | | | Lithium-ion battery | |
|---|---|---|---|---|---|---|---|
| | Reaction temperature of first active material T1 (°C) | Reaction temperature of second active material T2 (°C) | Terminal potential slope of button battery lithium deintercalation curve of first active material Sa (mAh•g⁻¹) | Terminal potential slope of button battery lithium deintercalation curve of second active material Sb (mAh•g⁻¹) | Sb–Sa (mAh•g⁻¹) | Volumetric energy density E (Wh/L) | Electrochemical impedance Rct (mΩ) |
| Example 1 | 1000 | 800 | 2 | 14 | 12 | 744 | 28 |
| Example 2 | 900 | 900 | 4 | 12 | 8 | 750 | 30 |
| Example 3 | 850 | 1000 | 5 | 8 | 3 | 756 | 33 |
| Example 4 | 800 | 950 | 6 | 9 | 3 | 750 | 31 |
| Example 5 | 750 | 950 | 7 | 9 | 2 | 749 | 30 |
| Example 6 | 1000 | 1150 | 2 | 5 | 3 | 758 | 38 |
| Example 7 | 950 | 1050 | 3 | 7 | 4 | 753 | 37 |
| Example 8 | 900 | 1100 | 4 | 6 | 2 | 758 | 35 |
| Example 9 | 850 | 900 | 5 | 12 | 7 | 752 | 29 |
| Example 10 | 800 | 850 | 6 | 13 | 7 | 742 | 28 |
| Example 11 | 750 | 800 | 7 | 14 | 7 | 740 | 26 |
| Comparative example 1 | 1000 | 1200 | 2 | 4 | 2 | 760 | 45 |
| Comparative example 2 | 750 | 1200 | 7 | 4 | –3 | 753 | 42 |

| Example and Comparative example | Preparation parameter | | Negative electrode | | | Lithium-ion battery | |
|---|---|---|---|---|---|---|---|
| | Reaction temperature of first active material T1 (°C) | Reaction temperature of second active material T2 (°C) | Terminal potential slope of button battery lithium deintercalation curve of first active material Sa (mAh•g$^{-1}$) | Terminal potential slope of button battery lithium deintercalation curve of second active material Sb (mAh•g$^{-1}$) | Sb–Sa (mAh•g$^{-1}$) | Volumetric energy density E (Wh/L) | Electrochemical impedance Rct (mΩ) |
| Comparative example 3 | 750 | / | 7 | 16 | 9 | 736 | 25 |
| Comparative example 4 | / | 900 | 8 | 12 | 4 | 737 | 28 |

Note: "/" represents that corresponding thermal treatment steps are not performed.

It can be seen from Example 1 to Example 11 in Table 1 that the value of Sa mainly affects the energy density of the lithium-ion battery, and the value of Sb mainly affects the electrochemical impedance of the lithium-ion battery. When Sa satisfies the range 2 mAh•g$^{-1}$/V≤Sa≤7 mAh•g$^{-1}$/V, and Sb satisfies the range 5 mAh•g$^{-1}$/V≤Sb≤14 mAh•g$^{-1}$/V, the lithium-ion battery has high energy density, and its electrochemical impedance Rct is ≤ 35 mΩ, indicating that the lithium-ion battery has excellent kinetic performance.

When 2 mAh•g$^{-1}$/V≤Sa≤5 mAh•g$^{-1}$/V and 5 mAh•g$^{-1}$/V≤Sb≤12 mAh•g$^{-1}$/V, the lithium-ion battery has higher energy density and has a volumetric energy density greater than 750 Wh/L. When 2 mAh•g$^{-1}$/V≤Sa≤7 mAh•g$^{-1}$/V and 8 mAh•g$^{-1}$/V≤Sb≤14 mAh•g$^{-1}$/V, the lithium-ion battery has small electrochemical impedance, and Rct≤30 mΩ.

It can be seen from Comparative example 1 and Comparative example 2 that when Sb is less than 5 mAh•g$^{-1}$/V, the lithium-ion battery has excessively large Rct and significantly affected kinetic performance.

Based on Example 2, Table 2 shows a further research result of influences of the difference between the terminal potential slope Sa of the button battery lithium deintercalation curve of the first active material and the terminal potential slope Sb of the button battery lithium deintercalation curve of the second active material on the performance of the Lithium-ion battery in a way of regulating the terminal potential slopes of the button battery lithium deintercalation curves of the active materials by controlling the reaction time of the active materials.

**Table 2**

| Example | Preparation parameter | | Negative electrode | | | Lithium-ion battery | |
|---|---|---|---|---|---|---|---|
| | Reaction time of first active material H1 (h) | Reaction time of second active material H2 (h) | Terminal potential slope of button battery lithium deintercalation curve of first active material Sa (mAh•g⁻¹) | Terminal potential slope of button battery lithium deintercalation curve of second active material Sb (mAh•g⁻¹) | Sb-Sa (mAh•g⁻¹) | Volumetric energy density E (Wh/L) | Electrochemical impedance Rct (mΩ) |
| Example 2 | 6 | 4 | 4 | 12 | 8 | 750 | 30 |
| Example 12 | 6 | 5 | 4 | 11 | 7 | 750 | 31 |
| Example 13 | 6 | 6 | 4 | 10 | 6 | 752 | 32 |
| Example 14 | 5 | 6 | 5 | 10 | 5 | 750 | 31 |
| Example 15 | 4 | 6 | 6 | 10 | 4 | 749 | 30 |
| Example 16 | 3 | 6 | 7 | 10 | 3 | 748 | 29 |
| Example 17 | 4 | 7 | 6 | 8 | 2 | 753 | 32 |
| Example 18 | 5 | 2 | 5 | 14 | 9 | 742 | 26 |

It can be seen from Table 2 that it is necessary to control a range of the difference between Sb and Sa to further balance the volumetric energy density and electrochemical impedance of the lithium-ion battery. Same conclusion can be obtained by analysis based on combination of Table 1 and Table 2. When 4 mAh•g⁻¹/V≤Sa≤7 mAh•g⁻¹/V, 8 mAh•g⁻¹/V≤Sb≤12 mAh•g⁻¹/V, and 5 mAh•g⁻¹/V≤Sb-Sa≤8 mAh•g⁻¹/V, the volumetric energy density and kinetic performance of the lithium-ion battery can be further improved.

Based on Example 14, Table 3 shows a further research result of influences of the thickness of the first active material layer and the thickness of the second active material layer on the performance of the Lithium-ion battery.

**Table 3**

| Example | Negative electrode | | Lithium-ion battery | |
|---|---|---|---|---|
| | Thickness $T_A$ of first active material layer/thickness T of negative electrode active material layer | Thickness $T_B$ of second active material layer/thickness T of negative electrode active material layer | Volumetric energy density E (Wh/L) | Electrochemical impedance Rct (mΩ) |
| Example 14 | 60% | 40% | 750 | 31 |
| Example 19 | 65% | 35% | 754 | 33 |
| Example 20 | 70% | 30% | 755 | 35 |

(continued)

| Example | Negative electrode | | Lithium-ion battery | |
| | Thickness $T_A$ of first active material layer/thickness T of negative electrode active material layer | Thickness $T_B$ of second active material layer/thickness T of negative electrode active material layer | Volumetric energy density E (Wh/L) | Electrochemical impedance Rct (mΩ) |
|---|---|---|---|---|
| Example 21 | 75% | 25% | 755 | 36 |
| Example 22 | 80% | 20% | 756 | 37 |
| Example 23 | 85% | 15% | 756 | 38 |
| Example 24 | 90% | 10% | 757 | 42 |
| Example 25 | 55% | 45% | 741 | 24 |

It can be seen from data comparison of Example 14, Example 19 to Example 24, and Example 25 that when the thickness percentage of the first active material layer satisfies a range of 60% to 85% and the thickness percentage of the second active material layer satisfies a range of 15% to 40%, the lithium-ion battery has high volumetric energy density and excellent kinetic performance.

Based on Example 21, Table 4 shows a further research result of influence of the gram capacity of the negative electrode plate on the performance of the Lithium-ion battery.

**Table 4**

| Example | Preparation parameter | | Negative electrode | Lithium-ion battery | |
| | Proportion of coating agent for first active material W1 | Proportion of coating agent for second active material W2 | Cap (mAh/g) | Volumetric energy density E (Wh/L) | Electrochemical impedance Rct (mΩ) |
|---|---|---|---|---|---|
| Example 21 | 2% | 5% | 358 | 755 | 36 |
| Example 26 | 3% | 7% | 355 | 752 | 33 |
| Example 27 | 3% | 4% | 359 | 755 | 36 |
| Example 28 | 3% | 3% | 360 | 756 | 37 |
| Example 29 | 2% | 4% | 361 | 756 | 37 |
| Example 30 | 2% | 3% | 363 | 757 | 38 |
| Example 31 | 1% | 3% | 365 | 757 | 39 |
| Example 32 | 5% | 8% | 354 | 742 | 27 |

It can be seen from Example 32 that when the gram capacity of the negative electrode is smaller than 355 mAh/g, the lithium-ion battery has low Rct but significant energy density loss.

It can be seen from Example 21 and Example 26 to Example 31 that when the gram capacity of the negative electrode satisfies a range of 355 mAh/g to 365 mAh/g, the lithium-ion battery has high volumetric energy density and excellent kinetic performance.

Although some exemplary embodiments of this application have been illustrated and described, this application is not limited to the disclosed embodiments. On the contrary, persons of ordinary skill in the art will recognize that some modifications and changes can be made to the described embodiments without departing from the spirit and scope of this application described in the appended claims.

**Claims**

1.  A secondary battery, comprising a negative electrode, wherein the negative electrode comprises a current collector and a negative electrode active material layer provided on the current collector, the negative electrode active material layer comprises a first active material layer and a second active material layer, and the first active material layer is provided between the current collector and the second active material layer;

    the first active material layer comprises a first active material; a first button battery using lithium plate as a negative electrode and the first active material as a positive material of a positive electrode experiences a charge and discharge test, and a terminal potential slope of a lithium deintercalation curve of the first button battery is denoted as Sa; and
    the second active material layer comprises a second active material; a second button battery using lithium plate as a negative electrode and the second active material as a positive material of a positive electrode experiences a charge and discharge test, a terminal potential slope of a lithium deintercalation curve of the second button battery is denoted as Sb, and Sa<Sb; wherein $2\ \mathrm{mAh \cdot g^{-1}/V} \leq Sa \leq 7\ \mathrm{mAh \cdot g^{-1}/V}$, and $5\ \mathrm{mAh \cdot g^{-1}/V} \leq Sb \leq 14\ \mathrm{mAh \cdot g^{-1}/V}$.

2.  The secondary battery according to claim 1, wherein $2\ \mathrm{mAh \cdot g^{-1}/V} \leq Sa \leq 5\ \mathrm{mAh \cdot g^{-1}/V}$, and $5\ \mathrm{mAh \cdot g^{-1}/V} \leq Sb \leq 12\ \mathrm{mAh \cdot g^{-1}/V}$.

3.  The secondary battery according to claim 1 or 2, wherein $8\ \mathrm{mAh \cdot g^{-1}/V} \leq Sb \leq 14\ \mathrm{mAh \cdot g^{-1}/V}$.

4.  The secondary battery according to any one of claims 1 to 3, wherein $4\ \mathrm{mAh \cdot g^{-1}/V} \leq Sa \leq 7\ \mathrm{mAh \cdot g^{-1}/V}$, and $8\ \mathrm{mAh \cdot g^{-1}/V} \leq Sb \leq 12\ \mathrm{mAh \cdot g^{-1}/V}$.

5.  The secondary battery according to any one of claims 1 to 4, wherein $2\ \mathrm{mAh \cdot g^{-1}/V} \leq Sb\text{-}Sa \leq 12\ \mathrm{mAh \cdot g^{-1}/V}$.

6.  The secondary battery according to claim 4, wherein $5\ \mathrm{mAh \cdot g^{-1}/V} \leq Sb\text{-}Sa \leq 8\ \mathrm{mAh \cdot g^{-1}/V}$.

7.  The secondary battery according to any one of claims 1 to 6, wherein a thickness of the negative electrode active material layer is T, a thickness of the first active material layer is Ta, and a thickness of the second active material layer is Tb, wherein $60\% \leq Ta/T \leq 85\%$, and $15\% \leq Tb/T \leq 40\%$.

8.  The secondary battery according to any one of claims 1 to 7, wherein the first active material comprises natural graphite and/or artificial graphite, and the second active material comprises artificial graphite.

9.  The secondary battery according to any one of claims 1 to 8, wherein the negative electrode satisfies at least one of the following conditions (i) to (iii):

    (i) the negative electrode has a gram capacity of $335\ \mathrm{mAh \cdot g^{-1}}$ to $365\ \mathrm{mAh \cdot g^{-1}}$;
    (ii) the negative electrode has a porosity of 20% to 40%; or
    (iii) the negative electrode has a compacted density of $1.60\ \mathrm{g/cm^3}$ to $1.80\ \mathrm{g/cm^3}$.

10. An electronic apparatus, comprising the secondary battery according to any one of claims 1 to 9.

11. A method for preparing a negative electrode, wherein the negative electrode comprises a current collector and a negative electrode active material layer provided on a surface of the current collector, the negative electrode active material layer comprises a first active material layer and a second active material layer, the first active material layer is provided between the current collector and the second active material layer, the first active material layer comprises a first active material, and the second active material layer comprises a second active material; and the method comprises:

preparation of the first active material:

mixing artificial graphite and/or natural graphite with a coating agent to prepare a first mixture, wherein a mass percentage of the coating agent is 1% to 5% based on mass of the first mixture,
performing a first thermal treatment on the first mixture in an inert atmosphere to prepare a first thermal treatment product, and
performing a second thermal treatment on the first thermal treatment product in a mixed gas of $CO_2$ and $N_2$ to prepare the first active material; and

preparation of the second active material:

mixing artificial graphite with the coating agent to prepare a second mixture, wherein a mass percentage of the coating agent is 3% to 8% based on a mass of the second mixture, and
performing a third thermal treatment on the second mixture in an inert atmosphere to prepare the second active material; wherein
the first thermal treatment is performed at 950°C to 1200°C for 1 h to 5 h;
the second thermal treatment is performed at 750°C to 1100°C for 2 h to 8 h;
the third thermal treatment is performed at 700°C to 1150°C for 4 h to 10 h; and
the coating agent is asphalt.

12. The method according to claim 11, wherein the second thermal treatment is performed at 800°C to 1000°C.

13. The method according to claim 11 or 12, wherein the second thermal treatment is performed for 5 h to 6 h.

14. The method according to any one of claims 11 to 13, wherein in the preparation of the first active material, the mass percentage of the coating agent is 1% to 3% based on the mass of the first mixture; and
in the preparation of the second active material, the mass percentage of the coating agent is 3% to 5% based on the mass of the second mixture.

**Comparison of terminal potential slopes of button battery lithium deintercalation curves**

FIG. 1

**Comparison of kinetic performance**

FIG. 2

Europäisches
Patentamt

European
Patent Office

Office européen
des brevets

# EUROPEAN SEARCH REPORT

**Application Number**

EP 24 17 9217

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | Berg Clara ET AL: "Comparison of Silicon and Graphite Anodes: Temperature-Dependence of Impedance Characteristics and Rate Performance", Journal of The electrochemical Society, 29 March 2023 (2023-03-29), XP093207437, DOI: 10.1149/1945-7111/acc09d] Retrieved from the Internet: URL:https://iopscience.iop.org/article/10.1149/1945-7111/acc09d/pdf * the whole document * | | INV. H01M4/587 ADD. H01M4/02 |
| A | CN 115 706 218 A (SK ENERGY CO LTD) 17 February 2023 (2023-02-17) * the whole document * | 11-14 | |
| A | CN 103 283 067 A (HITACHI LTD) 4 September 2013 (2013-09-04) * the whole document * | 11-14 | |
| A | CN 115 706 205 A (SK ENERGY CO LTD) 17 February 2023 (2023-02-17) * the whole document * | 11-14 | TECHNICAL FIELDS SEARCHED (IPC) H01M |
| A | CN 112 382 794 A (A123 SYSTEMS LLC; WANXIANG GROUP CO LTD) 19 February 2021 (2021-02-19) * the whole document * | 11-14 | |

The present search report has been drawn up for all claims

| Place of search | Date of completion of the search | Examiner |
|---|---|---|
| Munich | 24 September 2024 | Radeck, Stephanie |

## ANNEX TO THE EUROPEAN SEARCH REPORT
## ON EUROPEAN PATENT APPLICATION NO.

EP 24 17 9217

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2024

| Patent document cited in search report | | Publication date | Patent family member(s) | | Publication date |
|---|---|---|---|---|---|
| CN 115706218 | A | 17-02-2023 | CN | 115706218 A | 17-02-2023 |
| | | | EP | 4135062 A1 | 15-02-2023 |
| | | | KR | 20230025112 A | 21-02-2023 |
| | | | US | 2023063421 A1 | 02-03-2023 |
| CN 103283067 | A | 04-09-2013 | CN | 103283067 A | 04-09-2013 |
| | | | JP | 5302456 B1 | 02-10-2013 |
| | | | JP | WO2013098962 A1 | 30-04-2015 |
| | | | KR | 20130100044 A | 09-09-2013 |
| | | | US | 2013164618 A1 | 27-06-2013 |
| | | | WO | 2013098962 A1 | 04-07-2013 |
| CN 115706205 | A | 17-02-2023 | CN | 115706205 A | 17-02-2023 |
| | | | EP | 4135061 A1 | 15-02-2023 |
| | | | KR | 20230025113 A | 21-02-2023 |
| | | | US | 2023068138 A1 | 02-03-2023 |
| CN 112382794 | A | 19-02-2021 | NONE | | |

EPO FORM P0459

For more details about this annex : see Official Journal of the European Patent Office, No. 12/82